# EUROPEAN PATENT APPLICATION

(11) **EP 3 261 340 A1**
(43) Date of publication of application: **27.12.2017**
(21) Application number: 17175863.4
(22) Date of filing: 13.06.2017
(51) Int. Cl.: H04N 7/15, H04L 12/18

(54) **SYSTEM AND METHOD FOR RECORDING A MESH PEER-TO-PEER VIDEOCONFERENCE**

(30) Priority: 13.06.2016 IN 201631020157; 27.07.2016 US 201615221385
(71) Applicant: Polycom, Inc., San Jose, CA 95002 (US)
(72) Inventor: PAI, Deep Subhash, 411004 Pune (IN); IGNJATIC, Dragan, 111070 Belgrade (RS)
(74) Representative: Käck, Stefan

(57) **Abstract**

Recording of sessions in a peer-to-peer (P2P) videoconference can be performed. In a first embodiment each participant (202-206) provides a one-way audio and video stream to a recording server (212), the recording server (212) cooperating with a signaling server (208) to establish the media streams and to record the desired streams and place desired restrictions on the resulting stored file. In a second embodiment, a plurality of recording servers are present, with participants cooperating with one of the recording servers to record each participants audio and video stream. In a third embodiment a recording server is integrated with the participant endpoint, with that participant using the local recording server.

## Description

### BACKGROUND

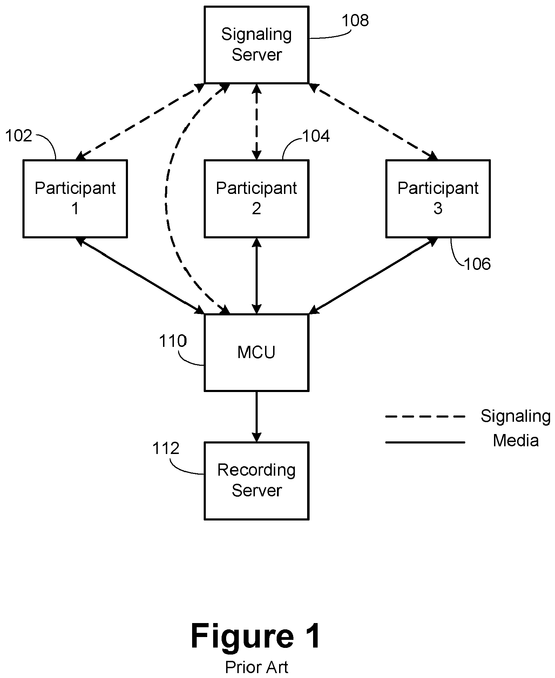

In a traditional videoconference as shown in Fig. 1, recording the videoconference is easily performed. Each participant 102, 104, 106 in the videoconference provides signaling requests to a signaling server 108 and interacts with a multipoint control unit (MCU) 110 to exchange video and audio streams. The MCU 110 receives the audio and video stream from each participant 102, 104, 106 and composes them into an audio and video stream for each participant 102, 104, 106. A recording server 112 is connected to the MCU 110 to record sessions. It is understood that the signaling server 108 and the MCU 110 could be in the same unit or could be separate as shown. When a participant 102, 104, 106 elects to have the session recorded, the record request is provided to the signaling server 108, which provides the request to the MCU 110, which then provides the audio and video of the session to the recording server 112.

A full mesh peer-to-peer (P2P) videoconference is achieved by setting up independent audio/video real-time RTP streams between each participant of the conference. Setting up individual streams with each participant allows the videoconferencing clients the capability to independently compose the video or to select which participant it wants to send/receive the video. However, because a centralized device like the MCU is not present, recording a session is not readily performed.

### SUMMARY

The invention is defined in claims 1, 6, and 11, respectively. Particular embodiments are set out in the dependent claims.

In embodiments according to the present invention, recording of sessions in a P2P videoconference can be performed. In a first embodiment each participant provides a one-way audio and video stream to a recording server, the recording server cooperating with the signaling server to establish the media streams and to record the desired streams and place desired restrictions on the resulting stored file. In a second embodiment, a plurality of recording servers are present, with participants cooperating with one of the recording servers to record each participants audio and video stream. In a third embodiment a recording server is integrated with the participant endpoint, with that participant using the local recording server.

### BRIEF DESCRIPTION OF THE FIGURES

The accompanying drawings, which are incorporated in and constitute a part of this specification, illustrate an implementation of apparatus and methods consistent with the present invention and, together with the detailed description, serve to explain advantages and principles consistent with the invention.
Figure 1 is a block diagram illustrating connections and operations of a videoconferencing configuration according to the prior art.
Figure 2 is a block diagram illustrating connections and operations of a peer to peer videoconferencing configuration of a first embodiment according to the present invention.
Figure 3 is a block diagram illustrating connections and operations of a peer to peer videoconferencing configuration of a second embodiment according to the present invention.
Figure 4 is a block diagram illustrating connections and operations of a peer to peer videoconferencing configuration of a third embodiment according to the present invention.
Figure 5 is a flowchart of operations according to the present invention.
Figure 6 is a block diagram of an endpoint according to the present invention.
Figure 7 is a block diagram of signaling server according to the present invention.
Figure 8 is a block diagram of recording server according to the present invention.

### DETAILED DESCRIPTION OF THE PREFERRED EMBODIMENTS

Systems according to the present invention embody recording architectures where the recording server or servers are added as P2P participants in a full mesh conference.

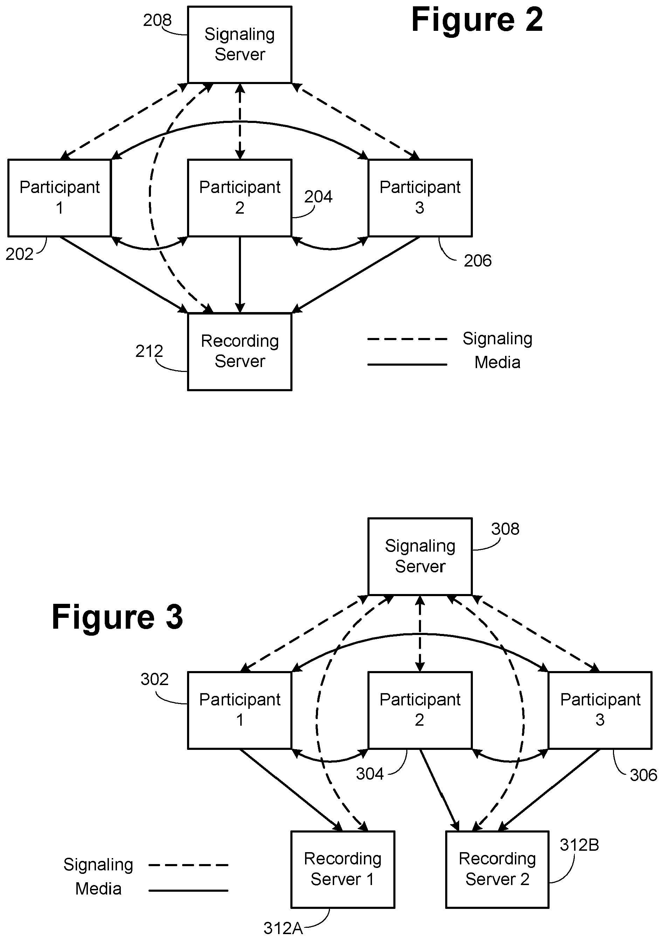

Referring to Figure 2, a recording server 212 establishes a one-way (receive only) peer media channel with each of the participants (a.k.a. endpoints) 202, 204, 206 in the conference as requested/directed by a signaling server 208. This enables the recording server 212 to receive media streams (audio and video) from each participant 202, 204, 206 separately, which it then records separately.

The recording server 212 establishes and modifies in runtime the quality (video size, bitrates, frame rate, etc) of the media streams it receives and stores for each participant 202, 204, 206 in the conference, since the recording is always separate. For example, the recording server 212 might want to receive high bit-rate streams from actively speaking participants while receiving low bit-rate streams for all other participants.

According to the present invention, each participant 202, 204, 206 has recording permissions, such as allow, deny or make private. This allows a participant to choose whether he or she agrees to be recorded. For example, if Participant 1 202 initiates a conference recording, Participant 2 204 can choose not to record his streams, while Participant 3 206 might choose to record his streams, but keep them private. The selection of each participant's recording status can be seen by other participants (for example, in the videoconference roster), so they are aware about which streams are being recorded and will be available for playback in the final recording.

The signaling server 208 is responsible for setting up the media channels and managing permissions, as well as ensuring there are sufficient recording resources in the network to serve demand.

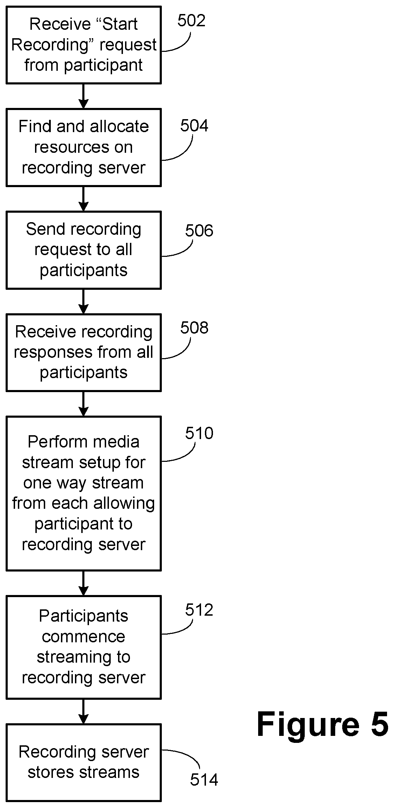

Referring to Fig. 5, the flow is as follows:
Participant 1 202 pushes the "Start Recording" button on his videoconference unit, which sends a request to the signaling server 208. In step 502 the signaling server 208 receives the "Start Recording" request from the participants.

In step 504 the signaling server 208 finds and allocates resources on a suitable recording server(s) 212.

In step 506 the signaling server 212 sends a recording permissions request to all the participants 202, 204, 206.

The participants 202, 204, 206 choose to allow the recording, deny the recording of their streams or make their stream recording private.

The permission selection request is sent back from each participant to the signaling server, which are received by the signaling server 208 in step 508.

In step 510 the signaling server 208 initiates media stream setup for a one-way (participant to recording server) P2P stream between each participant 202, 204, 206 and the recording server(s) 212.

On completion of media stream setup, in step 512 each participant starts streaming their audio and video to the recording server 212.

In step 514 the recording server(s) 212 store the recording. It may optionally store a different file for each participant in the conference separately, with metadata used to indicate the session and the other participants, to allow the entire conference to be recreated if desired.

This method of recording streams directly from the participant can be further optimized by distributing the recordings on multiple servers, as shown in Figure 3. The signaling server 308 chooses to setup the recording media streams of participants 302, 304, 306 in a conference with more than one recording servers 312A, 312B. The choice of which recording server 312A, 312B to use for each participant 302, 304, 306 can be based on multiple conditions, such as geographic location (to co-locate the participant and the recording server), bandwidth uplink (from participant to the recording server) and/or cost. Each recording server 312A, 312B can include metadata to indicate the existence of recorded streams on the other recording server 312B, 312A in addition to the normal metadata, to again allow the entire conference to be recreated if desired.

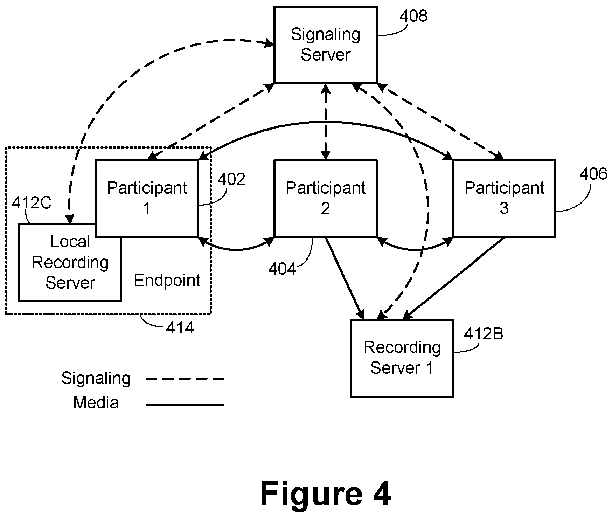

In an additional embodiment, a recording server 412C (as a component) is bundled with the participant 402 (i.e. part of endpoint 414) and can record the participant's audio and video streams locally, as shown in Figure 4, thus obviating the need to transmit one stream over the network. The signaling server 408, participants 404, 406 and recording server 412B are the same as in Fig. 3. From the perspective of signaling and user experience, everything above would be applicable for such a local recording server and would behave exactly the same.

At the end of the conference, or when the recording is stopped, the signaling server requests the recording server(s) to stop the recordings. The recording server may transfer the recordings to a content delivery network (CDN). The signaling server may upload the metadata that ties the separate recordings into a single conference recording. Such metadata contains information such as the conference details, participant details, active speaker details etc., which is useful while playing back the recordings as discussed above.

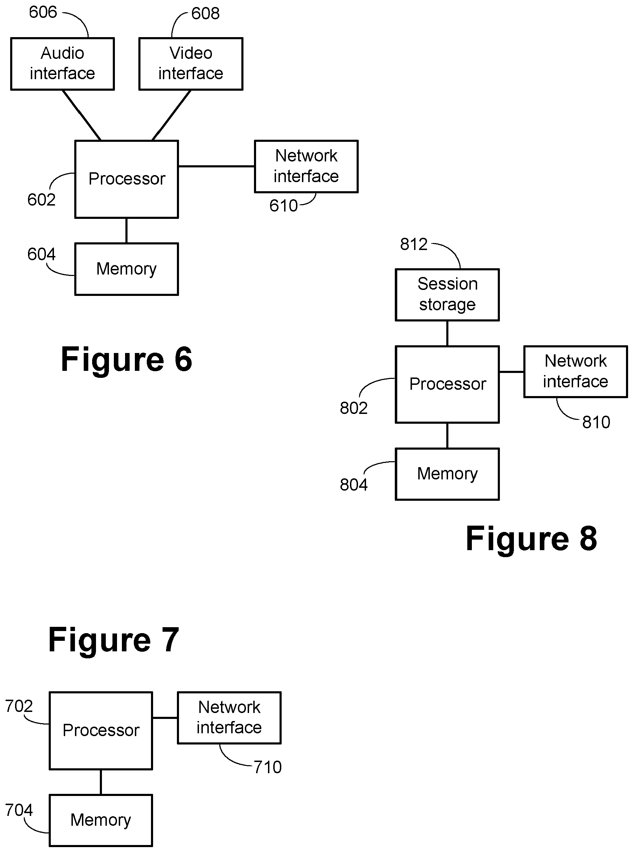

Figure 6 is a block diagram of an exemplary endpoint used by participants in the videoconference. A processor 602 is the primary computing element which handles the user interface, provides the audio and video codec functions and communicates with the signaling server. A memory 604 having volatile and non-volatile portions is connected to the processor 602 to provide working memory and to store the programs which execute on the processor 602 to provide the indicated functions. An audio interface 606 coupled to the processor 602 is connected to microphones to receive audio and to a loudspeaker to provide audio output. A video interface 608 coupled to the processor 602 is connected to a camera to provide the video input and to a monitor or other display to show the other participants. A network interface 610 coupled to the processor 602 is used to communicate with the other participants and the signaling server over the network connecting the various devices.

Figure 7 is a block diagram of an exemplary signaling server. A processor 702 is the primary computing element which handles the management and connections of the videoconference and communicates with the participants and the recording server. A memory 704 having volatile and non-volatile portions is connected to the processor 702 to provide working memory and to store the programs which execute on the processor 702 to provide the indicated functions. A network interface 710 coupled to the processor 702 is used to communicate with the other participants and the recording server over the network connecting the various devices.

Figure 8 is a block diagram of an exemplary recording server. A processor 802 is the primary computing element which handles the storage of the sessions and communicates with the participants and the signaling server. A memory 804 having volatile and non-volatile portions is connected to the processor 802 to provide working memory and to store the programs which execute on the processor 802 to provide the indicated functions. A network interface 810 coupled to the processor 802 is used to communicate with the other participants and the signaling server over the network connecting the various devices. Session storage 812 provides the bulk storage for storing the recorded sessions.

The above description is intended to be illustrative, and not restrictive. For example, the above-described embodiments may be used in combination with each other. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein."

## Claims

1. A signaling server for use in a full mesh peer-to-peer videoconference session with a plurality of endpoints (202-206, 302-306, 402-406) and a recording server (212, 312A-B, 412B-C), the signaling server (208, 308, 408) comprising:
a network interface (710) adapted to communicate with the plurality of endpoints (202-206, 302-306, 402-406) and the recording server (212, 312A-B, 412B-C);
a processor (702) coupled to the network interface (710); and
a memory (704) coupled to the processor (702) and storing programs which when executed cause the processor (702) to perform a method comprising the steps of:
receiving (502) at least one request from an endpoint (202-206, 302-306, 402-406) to record the videoconference session;
allocating (504) resources on the recording server (212, 312A-B, 412B-C) to store the videoconference session; and
setting up (510) one way media streams from at least one endpoint (202-206, 302-306, 402-406) to the recording server (212, 312A-B, 412B-C).

2. The signaling server of claim 1, wherein the method further comprises the steps of:
providing (506) requests to each of the plurality of endpoints (202-206, 302-306, 402-406) to determine permission to record the videoconference session; and receiving (508) permission responses from the plurality of endpoints (202-206, 302-306, 402-406),
wherein the step of setting up (510) one way media streams is performed for each endpoint granting permission.

3. The signaling server of claim 2, wherein the permission responses include an option to make a recording private, and wherein the resources allocated on the recording server (212, 312A-B, 412B-C) mark the stored stream private.

4. The signaling server of claim 1, 2 or 3, wherein there are at least two recording servers (312A-B, 412B-C),
wherein the step of allocating (504) resources is done for each recording server (312A-B, 412B-C), and
wherein the one way media streams are set up to provide at least one stream to each recording server (312A-B, 412B-C).

5. The signaling server of claim 4, wherein one of the recording servers (412C) is in one of the endpoints (414).

6. A method of recording a full mesh peer-to-peer videoconference session with a plurality of endpoints (202-206, 302-306, 402-406), a signaling server (208, 308, 408) and a recording server (212, 312A-B, 412B-C), the method comprising the steps of:
receiving (502) at least one request from an endpoint (202-206, 302-306, 402-406) to record the videoconference session;
allocating (504) resources on the recording server (212, 312A-B, 412B-C) to store the videoconference session; and
setting up (510) one way media streams from at least one endpoint (202-206, 302-306, 402-406) to the recording server (212, 312A-B, 412B-C).

7. The method of claim 6, further comprises the steps of:
providing (506) requests to each of the plurality of endpoints (202-206, 302-306, 402-406) to determine permission to record the videoconference session; and receiving (508) permission responses from the plurality of endpoints (202-206, 302-306, 402-406),
wherein the step of setting up (510) one way media streams is performed for each endpoint granting permission.

8. The method of claim 7, wherein the permission responses include an option to make a recording private, and wherein the resources allocated on the recording server (212, 312A-B, 412B-C) mark the stored stream private.

9. The method of claim 6, 7 or 8, wherein there are at least two recording servers (312A-B, 412B-C),
wherein the step of allocating (504) resources is done for each recording server (312A-B, 412B-C), and
wherein the one way media streams are set up to provide at least one stream to each recording server (312A-B, 412B-C).

10. The method of claim 9, wherein one of the recording servers (412C) is in one of the endpoints (414).

11. A computer-readable storage medium comprising instructions which, when executed by a computer, cause the computer to carry out the method of any of claims 6-10.
